# EUROPÄISCHE PATENTSCHRIFT

(11) **EP 2 646 625 B1**
(45) Veröffentlichungstag und Bekanntmachung des Hinweises auf die Patenterteilung: **15.11.2017**
(21) Anmeldenummer: 11793728.4
(22) Anmeldetag: 01.12.2011
(51) Int. Cl.: F16L 15/00, E02D 5/80, E21B 17/042

(54) **KUPPLUNG, INSBESONDERE FÜR DAS VERBINDEN VON ANKERSTANGEN**
CLUTCH, ESPECIALLY FOR CONNECTING ANCHOR RODS
ÉLÉMENT D'ACCOUPLEMENT, NOTAMMENT POUR RELIER DES TIGES DE BOULON D'ANCRAGE

(30) Priorität: 03.12.2010 DE 102010061006
(43) Veröffentlichungstag der Anmeldung: 09.10.2013
(73) Patentinhaber: Friedr. Ischebeck GmbH, 58256 Ennepetal (DE)
(72) Erfinder: ISCHEBECK, Ernst Friedrich, 58256 Ennepetal (DE); COERSCHULTE, Ferdinand, 59846 Sundern (DE)
(74) Vertreter: Brötz, Helmut
(86) Internationale Anmeldenummer: PCT/EP2011/071501
(87) Internationale Veröffentlichungsnummer: WO 2012/072734

(56) Entgegenhaltungen:
- EP-A1- 0 391 119
- DE-A1- 4 220 636
- US-A- 4 770 448

## Beschreibung

Die vorliegende Erfindung betrifft eine Kupplung für das Verbinden von mit Außengewinde versehenen Traggliedern, vorzugsweise für das Verbinden von Ankerstangen von Injektionsbohrankern zum drehschlagenden Bohren, wobei die Kupplung eine hülsenartige Kupplungsmuffe umfasst mit von zwei gegenüberliegenden Seiten ausgehenden, jeweils mit Innengewinde versehenen Einschrauböffnungen für das Einschrauben von Traggliedern, wobei zwischen den beiden Innengewinden der Einschrauböffnungen an der Innenseite der Kupplungsmuffe ein nach radial innen weisender, sich vorzugsweise ringförmig entlang des gesamten Umfangs erstreckender, Montagevorsprung ausgebildet ist, wobei zwischen dem Montagevorsprung und den Innengewinden jeweils eine radiale, bzgl. der geometrischen Längsmittelachse der Kupplungsmuffe rotationssymmetrische, Ausnehmung ausgebildet ist, die an einen, vorzugsweise konischen, Auslauf des benachbarten Innengewindes angrenzt oder die das Innengewinde schneidet, wobei in die beiden Ausnehmungen jeweils ein elastisch deformierbarer, vorzugsweise aus Kunststoff hergestellter, Dichtring eingesetzt oder einsetzbar ist und wobei in einem unbelasteten bzw. unverformten Zustand des Dichtringes dessen Außendurchmesser größer als der Innendurchmesser des Montagevorsprunges ist und/oder größer als oder gleich groß wie der Kerndurchmesser des Innengewindes ist.

Im Stand der Technik sind Injektionsbohranker, die zur Erzielung größerer Ankerlängen mehrere, mittels Kupplungsmuttern verbundene Ankerstangen umfassen können, aus DE 34 00 182 C2 bekannt. Bezüglich bekannter Injektionsbohranker wird auch auf DE 38 28 335 C1 Bezug genommen. Je nach gewünschter Anwendung spricht man von Injektionsbohrankern, Verpresspfählen, Mikropfählen, Bodennägeln oder Felsankern. Zur Verbindung von einzelnen mit (häufig durchlaufendem) Außengewinde versehenen Ankerstangen sind im Stand der Technik unterschiedliche mit dazu passendem Innengewinde versehene Kupplungsmuffen bzw. Kupplungsmuttern bekannt. Bei einer einfachen Bauform ist ein mittiger, gewindefreier Abschnitt in der Kupplungsmuffe vorgesehen, der ein Hindurchschrauben von Ankerstangen verhindert. Nachteilig ist dabei, dass man den Gewindeauslauf am Mittenstopp fertigungstechnisch nur mit einem konischen Auslauf oder mit einem Hinterstich ausführen kann. Beides hat für das bei vielen Anwendungen gewünschte drehschlagende Einbohren des Injektionsbohrankers und auch für eine gewünschte spätere spielfreie Lastübertragung von wechselnden Druck- und Zugkräften Nachteile. Bei dem drehschlagenden Einbohren von Bohrinjektionsankern wird zunächst eine Bohrkrone an einem Längsende einer Ankerstange befestigt (bspw. aufgeschraubt), wobei ggf. zur Verlängerung bereits an dem gegenüberliegenden Längsende eine oder mehrere Ankerstangen mittels Kupplungsmuttern angeschlossen sein können. An dem der Bohrkrone gegenüberliegenden Längsende greift ein Antrieb an, welcher auf den Bohrinjektionsanker neben einem Drehmoment zusätzlich auch pulsierend in Längs- bzw. Axialrichtung wirkende Schläge ausübt, um dadurch das Durchdringen von festen Schichten bspw. im Untergrund zu unterstützen. Dabei besteht je nach Anzahl der Ankerstangen und der Ausführung der Kupplungen die Gefahr, dass ein Teil der Schlagenergie zwischen dem Antrieb und der Bohrkrone verloren geht. Bei einer weiteren bekannten Ausführung besitzt die Kupplungsmuffe im Inneren zwei um eine halbe Drehung gegeneinander versetzte Gewindeenden, wodurch sich allerdings ein Durchschrauben von Ankerstangen nur bis zu begrenzten Einschraubdrehmomenten verhindern lässt und wobei hier auch die Druck- und Schlagübertragung in der Kupplungsmuffe nur über das Gewinde als nachteilig empfunden wird. Auch wurde schon versucht, in Kupplungsmuffen einen inneren Anschlag für die Ankerstangen einzuschweißen oder dazu bspw. einen Spannstift in das Gewinde einzusetzen. Als Nachteil wird auch dabei eine nur eingeschränkte Druckübertragung und eine unerwünschte Kerbwirkung empfunden. Aus EP 0 391119 B1 ist ebenfalls eine mit Innengewinde versehene Kupplungsmuffe für Ankerstangen von selbstbohrenden Injektionsankern bekannt. Dabei wird zur kostengünstigen Herstellbarkeit darauf abgestellt, dass an die zylindrische Grundfläche des Innengewindes eine konisch zulaufende Grundfläche anschließt, auf welcher sich das Innengewinde fortsetzt. Aus DE 42 20 636 B4 ist schließlich eine Kupplungsmuffe der eingangs genannten Art bekannt, wobei zur Erzielung einer zuverlässigen Dichtigkeit vorgeschlagen wird, dass in der Kupplungsmuffe ein axialer Anschlag für eine Stirnfläche einer eingeschraubten Injektionsankerstange ausgebildet ist, dass vor diesem Anschlag ein gesondertes, eine zentrale Öffnung belassendes Dichtelement in Form eines O-Ringes aufgenommen ist, dass das Dichtelement in einer umlaufenden radialen, den Gewindeverlauf schneidenden Ausnehmung angeordnet ist und dass die Ausnehmung in ihrer Tiefe etwa der Tiefe des Gewindegrundes des Innengewindes entspricht. Auch wenn dieses Verbindungselement bzgl. der Dichtigkeit Vorteile gegenüber den zuvor genannten Kupplungsmuttern aufweist, erweist sich dort als Einschränkung, dass die O-Ringe im Kraftfluss liegen und insbesondere bei axialer Wechselbeanspruchung zu kraftlosem Schlupf führen können. Des Weiteren ist im Stand der Technik aus US 4770448 A eine Rohrverbindungskupplung bekannt.

Vor diesem Hintergrund liegt der vorliegenden Erfindung die Aufgabe zugrunde, eine Kupplung der eingangs genannten Art vorteilhaft weiterzubilden, so dass insbesondere die vorgenannten Einschränkungen möglichst weitgehend vermieden werden können. Insbesondere soll die erfindungsgemäße Weiterbildung bei zugleich guter Dichtwirkung auch eine möglichst verlustarme Übertragung von axialer Schlagenergie zulassen und aus möglichst einfach herstellbaren und montierbaren sowie preiswerten Komponenten bestehen.

Die Aufgabe wird erfindungsgemäß zunächst und im Wesentlichen in Verbindung mit den Merkmalen gelöst, dass die Kupplung einen, vorzugsweise aus Metall hergestellten, Klemmring aufweist, dessen Außendurchmesser kleiner als oder gleich groß wie der Innendurchmesser des Montagevorsprunges ist, und dass die Dichtringe jeweils eine rotationssymmetrische Anlagefläche aufweisen, die sich zur Anlage gegen eine der beiden Seitenflächen des Klemmringes in einem Radienintervall erstreckt, das bei einer zu dem Klemmring konzentrischen Ausrichtung der Dichtringe ein Radienintervall der Seitenflächen des Klemmringes geometrisch überschneidet. Da der Montagevorsprung, der Klemmring und die Dichtringe jeweils einen mittleren Hohlquerschnitt belassen, entsteht in der Kupplung ein durchgehender Hohlraum zwischen den hohlen Mittelkanälen zweier mittels der Kupplung gekuppelter Tragglieder bzw. Ankerstangen. Die Ankerstangen lassen sich beim Einschrauben in die Kupplungsmuffe stirnseitig unmittelbar in Anlage zu dem Klemmring bringen und somit von zwei gegenüberliegenden Seiten mittels des Klemmringes gegeneinander festspannen, wobei der Klemmring sandwichartig zwischen den beiden Ankerstirnflächen eingeklemmt ist. Der Klemmring ist zweckmäßig aus einem vergleichsweise (bspw. im Vergleich zu Kunststoff) schwer verformbaren Material, vorzugsweise aus Metall und weiter vorzugsweise aus Stahl, hergestellt. Da sich die Stirnflächen der ebenfalls zweckmäßig aus Stahl hergestellten Ankerstangen unmittelbar gegen den Klemmring abstützen, wird in Richtung der geometrischen Längsmittelachse der Kupplung, d.h. in axialer Richtung, eine für in dieser Richtung wirkende Kräfte, insbesondere Schlag- bzw. Stoßkräfte, besonders steife Verbindung der beiden Ankerstangen erreicht. Wird eine solche Kupplungsanordnung bei einem Bohrinjektionsanker verwendet, ermöglicht dies beim drehschlagenden Einbringen des Bohrinjektionsankers bspw. in den Untergrund, dass die von dem Bohrantrieb zur Unterstützung des Vortriebes erzeugten axialen Schläge bzw. deren Schlagenergie unmittelbar von einer Ankerstange auf den Klemmring und von dort unmittelbar auf die benachbarte Ankerstange, d.h. ohne notwendigen Druckkraftfluss durch die Kupplungsmuffe, übertragen wird. Der Klemmring ermöglicht somit eine axial unnachgiebige Abstützung beider Tragglieder, so dass sich auch eine größere Anzahl von Traggliedern bzw. Ankerstangen mittels entsprechend mehrerer erfindungsgemäßer Kupplungen insgesamt zu einem axial unnachgiebigen Bohrinjektionsanker zusammensetzen lassen. Zusätzlich zu einer dadurch verlustarmen Schlagenergie-Übertragung bietet die erfindungsgemäße Kupplung auch Vorzüge betreffend sowohl die Dichtwirkung, als auch die einfache Herstell- und Montierbarkeit, wobei die Dichtringe eine Doppelfunktion erfüllen können. Da die Dichtringe aus einem im Vergleich zu dem Klemmring leichter verformbaren elastischen Material, vorzugsweise aus Kunststoff wie bspw. Polyamid, bestehen und im Zuge des Einschraubens von Ankerstangen an den Dichtzonen gegen Flächen der Kupplungsmuffe und des Klemmringes gepresst werden, resultiert als Folge eines entlang des Umfanges lückenlosen Anschmiegens eine zuverlässige Dichtfunktion. Hinzu kommt eine Funktion der Dichtringe zur Erleichterung der Montage. Dazu ist bevorzugt, dass in dem unbelasteten Zustand des Dichtrings ihr Außendurchmesser größer als der Innendurchmesser des Montagevorsprungs und größer als der Kerndurchmesser des Innengewindes ist. Die beiden Dichtringe sind allerdings zweckmäßig so elastisch, dass sie mit den Fingern oval gedrückt und so in die Kupplungsmuffe geführt werden können, wo sie in den Gewindeauslauf gedreht und in die jeweilige Ausnehmung eingeclipst werden können. Zufolge der beschriebenen Durchmesserbeziehungen wird jeder Dichtring in Längs- bzw. Axialrichtung beidseitig formschlüssig zwischen dem Montagevorsprung und dem benachbarten Innengewinde gehalten. Zur Vormontage, d.h. um die Kupplung zum Einschrauben von Ankerstangen vorzubereiten, kann zweckmäßig in der Weise vorgegangen werden, dass zunächst nur einer der beiden Dichtringe auf die beschriebene Weise in eine Ausnehmung eingesetzt wird, dass anschließend der Klemmring durch die gegenüberliegende Einschrauböffnung in die Kupplungsmuffe eingesteckt wird, so dass er sich im Bereich des von dem Montagevorsprung aufgespannten Hohlquerschnittes befindet, und dass daran anschließend der zweite Dichtring auf die zuvor beschriebene Weise in die ihm zugeordnete Ausnehmung eingesetzt wird. Diese Reihenfolge ist jedoch nicht notwendig. Auch wenn der Außendurchmesser des Klemmringes, wie bevorzugt, etwas kleiner als der Innendurchmesser des Montagevorsprunges ist, d.h. wenn der Klemmring mit seitlichem Bewegungsspiel in bzw. durch den Montagevorsprung gesteckt werden kann, wird durch das Zusammenwirken der beiden Dichtringe bereits in dem vormontierten Zustand der Kupplung auch eine axiale Verliersicherung für den Klemmring erreicht, so dass sich die Kupplung auf der Baustelle leicht und zuverlässig montieren lässt. Dabei kann je nach gewählter näherer Gestaltung und Abmessung der Ausnehmungen und des angrenzenden Gewindeauslaufes vor dem Einschrauben der Tragglieder vorteilhaft noch eine gewisse axiale Beweglichkeit der Dichtringe und des Klemmringes relativ zu der Kupplungsmuffe bleiben, wobei bei der beschriebenen bevorzugten Ausgestaltung dabei trotzdem schon ein axial verliersicherer Halt des Klemmringes in der Kupplungsmuffe besteht, der sogar so beschaffen sein kann, dass der Klemmring unter Umständen nur mittels speziellem Werkzeug wieder aus der Kupplungsmuffe entfernt werden kann. Verbleibt bei der Vormontage ein begrenztes axiales Bewegungsspiel, d.h. fehlt es im vormontierten Zustand noch an einem in einer ganz bestimmten Position festliegenden Axialanschlag, stellt sich die Klemmhülse bzw. der Axialanschlag erst beim Einschrauben der Ankerstangen und, wie noch erläutert, ggf. auch noch bei dem Einbringen des Bohrinjektionsankers in den Untergrund bedarfsgerecht auf die angrenzenden Ankerstangen ein, wobei aber die gewünschte axiale Schlagsteifigkeit zu jeder Zeit erhalten bleibt. Da der Klemmring bei einer konzentrischen Ausrichtung nur von den beiden gegenüberliegenden, elastisch verformbaren Dichtringen in seiner Position gehalten wird, d.h. nicht direkt in Kontakt mit der steifen Kupplungsmuffe tritt, verbleibt auch nach dem Einschrauben der Ankerstangen eine gewisse von der Deformierbarkeit der Dichtringe bestimmte Beweglichkeit des Klemmringes relativ zu der Kupplungsmuffe. Es wurde nun überraschend gefunden, dass insbesondere die dadurch auch mögliche veränderliche Neigung des Klemmringes relativ zu einer zu der geometrischen Längsmittelachse senkrechten Bezugsebene von besonderem Vorteil beim Einbringen von Bohrinjektionsankern sein kann. Trifft ein Bohrinjektionsanker bei seinem Einbohren auf ein hartes Hindernis, kann es zu einem gewissen seitlichen Ausweichen und dadurch zu einer ggf. zeitlich veränderlichen leichten Schrägstellung der Ankerstangenenden in der Kupplungsmuffe, auch ggf. abhängig von dem bestehenden Gewindespiel, kommen. Die beiden Dichtringe, die quasi ein elastisches Lager für den Klemmring bilden, lassen dabei begrenzte Lageänderungen, insbesondere Neigungsänderungen, des Klemmringes innerhalb der Kupplungsmuffe zu, so dass sich der Klemmring selbstständig unter Einstellung jeweils größtmöglicher Kontakt- bzw. Lastübertragungsflächen mit den Stirnseiten der Ankerstangen ausrichten kann. Auch unter den beschriebenen widrigen Umständen behält die erfindungsgemäße Kupplung bzw. die mit den Ankerstangen gebildete Kupplungsanordnung daher eine hohe Schlagsteifigkeit. Alternativ kann eine solche begrenzte Gelenkigkeit der Kupplungsverbindung, je nach gewünschter Anwendung, vermieden werden, indem die Innenfläche des Montagevorsprunges und die Außenfläche des Klemmringes zylindrisch und mit zueinander gleichem Durchmesser ausgeführt werden. Bevorzugt ist vorgesehen, dass die Tiefe bzw. der Außendurchmesser der Ausnehmungen etwa der Gewindetiefe bzw. dem Außendurchmesser des Innengewindes entsprechen. Die Breite des Klemmringes wird zweckmäßig so gewählt, dass sich der Klemmring in Richtung der geometrischen Längsmittelachse bis in eine axiale Überlappung zu den beiden Innengewinden oder zumindest zu deren Auslauf erstreckt. Im Hinblick auf die vorangehenden Ausführungen ist bevorzugt, dass der Klemmring als ein von der Kupplungsmuffe separates Bauteil hergestellt ist. Wie beschrieben, kann der Klemmring dann lose in dem Hohlquerschnitt des Montagevorsprunges eingesetzt und verliersicher mittels der Dichtringe gehalten werden. Alternativ wäre denkbar, dass der Klemmring an dem Montagevorsprung befestigt, bspw. darin eingepresst oder eingeschweißt, ist. Insofern wäre sogar auch denkbar, den Klemmring alternativ einstückig mit der Kupplungsmuffe herzustellen.

Es bestehen zahlreiche weitere Möglichkeiten zur bevorzugten Weiterbildung. Bevorzugt ist vorgesehen, dass die besagten Ausnehmungen an den Montagevorsprung unmittelbar angrenzen. Es besteht die Möglichkeit, dass die in je einer Ausnehmung eingesetzten Dichtringe im unbelasteten bzw. undeformierten Zustand entlang ihres gesamten Umfanges oder zumindest umfangsbereichsweise in der Ausnehmung in einer zu der geometrischen Längsmittelachse parallelen Richtung ohne oder mit nur geringem Bewegungsspiel formschlüssig gehalten sind. Ein solches axiales Bewegungsspiel kann bspw. in der Größenordnung von nur wenigen Bruchteilen eines Millimeters, bspw. im Bereich von mehreren Zehnteln oder nur Hundertsteln Millimetern, liegen. Bevorzugt ist, dass die Dichtringe je einen radial inneren Ringabschnitt aufweisen, der auf seiner einen Seite von der Anlagefläche für den Klemmring berandet wird. Als zweckmäßig wird angesehen, dass zumindest in dem radialen Überschneidungsintervall die Anlagefläche des Dichtringes und die Seitenfläche des Klemmringes eine aufeinander zur Erzielung einer flächigen Abstützung angepasste, insbesondere zumindest bereichsweise konische und/oder im Profilquerschnitt gerundete, Formgebung aufweisen. Neben einer selbstzentrierenden Wirkung bei der Montage kann eine konische und/oder gerundete Formgebung die schon beschriebene mögliche Verschwenkbarkeit des Klemmringes relativ zu einer von dem Montagevorsprung aufgespannten Bezugsebene unterstützen. Des Weiteren ist bevorzugt, dass die Dichtringe je einen an dem inneren Ringabschnitt anschließenden, radial äußeren Ringabschnitt aufweisen, der von einer zylindrischen oder im Wesentlichen zylindrischen Innenfläche berandet wird, die geneigt oder gerundet in die Anlagefläche übergeht. Besagte Innenfläche kann an eine stirnseitige Seitenfläche des äußeren Ringabschnittes zur Abstützung gegen eine stirnseitige Seitenfläche des Montagevorsprunges angrenzen, wobei die Seitenflächen des äußeren Ringabschnittes und des Montagevorsprunges eine aufeinander zur Erzielung einer flächigen Abstützung angepasste Formgebung aufweisen und sich vorzugsweise in Radialrichtung quer bzw. senkrecht zu der geometrischen Längsmittelachse erstrecken. Es besteht die Möglichkeit, dass an dem äußeren Ringabschnitt die stirnseitige Seitenfläche, insbesondere gerundet, in eine Außenfläche übergeht, wobei die Außenfläche des äußeren Ringabschnittes, und vorzugsweise die daran anschließende Rundung, sowie die an die Seitenfläche des Montagevorsprunges anschließende Mantelfläche der Ausnehmung eine aufeinander zur Erzielung einer durchgehenden flächigen Abstützung angepasste Formgebung aufweisen. Die Außenfläche an dem äußeren Ringabschnitt kann in eine dazu geneigte Rückenfläche übergehen, wobei in einem quer zu der Umfangsrichtung orientierten Querschnitt die Rückenfläche zu der geometrischen Längsmittellinie der Kupplung stärker geneigt als der konische Auslauf des Innengewindes verlaufen kann. Bevorzugt kann eine Ausgestaltung gewählt sein, derzufolge in einem vormontierten Zustand der Kupplung, bei welchem die beiden Dichtringe in die Ausnehmungen eingesetzt sind und sich der Klemmring zwischen den beiden Dichtringen befindet, die Dichtringe mit den Seitenflächen des Klemmringes in Richtung der geometrischen Längsmittelachse im Wesentlichen bündig abschließen oder über die Seitenflächen des Klemmringes nach außen überstehen. Dies ist insbesondere bevorzugt bei Verwendung eines Klemmringes, bei dem sich die gegenüberliegenden stirnseitigen Seitenflächen in einem radial äußeren Ringflächenbereich konisch und/oder konvex gerundet erstrecken und in einem radial dazu inneren Ringflächenbereich senkrecht zu der geometrischen Längsmittelachse und zueinander planparallel verlaufen und bei dem der radial äußere Ringflächenbereich gerundet in den radial inneren Ringflächenbereich übergeht. Dies ist insbesondere vorteilhaft in Verbindung mit der Verwendung von Ankerstangen, deren Stirnfläche einen radial inneren ebenen Stirnflächenbereich und einen dazu radial äußeren Stirnflächenbereich, der nach radial außen hin (zumindest in einem Radienintervall) zunehmend in Längsrichtung der Ankerstange über den inneren Stirnflächenbereich übersteht, aufweist. Beim Einschrauben einer derartigen Ankerstange resultiert vorteilhaft eine axiale Stauchung und radiale Dehnung des elastischen Dichtringes, so dass das Dichtringprofil durch die Querdehnung an der Dichtringaußenseite konturentsprechend in den Hohlquerschnitt der Ausnehmung eingepresst wird und diese ausfüllt, wodurch eine besonders zuverlässige Dichtwirkung entsteht. Der Innendurchmesser des Montagevorsprunges kann vorzugsweise etwas kleiner als oder etwa gleich groß wie der Kerndurchmesser des Innengewindes sein. Auch ist bevorzugt, dass der Außendurchmesser der, vorzugsweise zylindrischen, Außenfläche des Klemmringes geringfügig kleiner als der Durchmesser der Innenfläche des inneren Ringabschnittes des Dichtringes ist, was eine mögliche Neigung des Dichtringes erleichtert. Bevorzugt ist auch, dass sich der äußere Ringflächenbereich der Seitenfläche des Klemmringes nach radial innen bis über die Anlagefläche des inneren Ringabschnittes des Dichtringes hinaus erstreckt.

Die Erfindung umfasst auch eine Kupplungsanordnung, die zumindest eine Kupplung umfasst, welche einzelne oder mehrere der vorangehend beschriebenen Merkmale aufweist. Dabei ist vorgesehen, dass in die Kupplungsmuffe von beiden Seiten je eine einen durchgehenden Mittelkanal aufweisende und mit, vorzugsweise in Längsrichtung durchgehendem, Außengewinde versehene Ankerstange für Injektionsbohranker bis zur Abstützung und vorzugsweise Verspannung der Stirnfläche der Ankerstange gegen die jeweils zugewandte Seitenfläche des Klemmringes eingeschraubt ist. Dabei ist bevorzugt, dass die Stirnfläche der Ankerstange einen radial inneren, ebenen Stirnflächenbereich aufweist und einen dazu radial äußeren Stirnflächenbereich, der nach radial außen hin zunehmend in Längsrichtung der Ankerstange über den inneren ebenen Stirnflächenbereich übersteht, und dass der radial äußere Stirnflächenbereich der Ankerstange und der radial äußere Ringflächenbereich des Klemmringes eine aufeinander zur Erzielung einer zumindest in einem begrenzten Radienintervall flächigen Abstützung abgestimmte konische und/oder im Profilquerschnitt gewölbte Formgebung aufweisen. Man könnte insofern auch von einer bevorzugt im Ganzen balligen Kontur der Stirnseiten des Klemmringes sprechen. Die entsprechend aufeinander abgestimmte Formgebung ermöglicht eine besonders große erzielbare Kontaktfläche zur Übertragung der Schlagenergie beim drehschlagenden Einbohren des Bohrinjektionsankers. Außerdem unterstützt eine solche aufeinander abgestimmte Formgebung die schon angesprochene mögliche Gelenkigkeit der Verbindung. Hinzu kommt der schon erläuterte Vorteil, dass Ankerstangen mit stirnseitig überstehendem Ringvorsprung, der bspw. als Walzgrat bei der Herstellung des Ankeraußengewindes entstehen kann, die elastischen Dichtringe axial staucht und dadurch die Dichtwirkung verbessert. Vorzugsweise bildet jeder Dichtring zwei Dichtzonen aus. Die eine Dichtzone befindet sich zwischen dem Dichtring und dem Klemmring, und die andere Dichtzone befindet sich zwischen dem Dichtring und der Stirnseite der Ankerstange an dem dort radial äußeren Stirnflächenbereich. Bevorzugt ist vorgesehen, dass der Außendurchmesser der planparallelen inneren Ringflächenbereiche des Klemmringes, zumindest in etwa, dem Außendurchmesser der ebenen, radial inneren Stirnflächenbereiche der Ankerstangen entspricht und/oder dass der Innendurchmesser der planparallelen inneren Ringflächenbereiche des Klemmringes, zumindest in etwa, gleich dem oder kleiner als der Innendurchmesser der radial inneren Stirnflächenbereiche der Ankerstangen ist. Dies ermöglicht große Kontaktflächen für eine gute Übertragung der Stoßenergie beim drehschlagenden Einbohren. Auch ist bevorzugt, dass der Außendurchmesser des radial äußeren Stirnflächenbereiches der Ankerstangen innerhalb des Radienintervalls liegt, in welchem sich die Anlagefläche der Dichtringe in unverformtem Zustand erstreckt. So resultiert beim Einschrauben der Ankerstangen zwangsläufig neben einer axialen Stauchung der Dichtringe zusätzlich auch eine radiale Aufweitung derselben, so dass die Dichtringe dichtend in die Ausnehmungen der Kupplungsmuffe eingepresst werden.

Die Erfindung umfasst weiterhin auch einen Injektionsbohranker, vorzugsweise zum drehschlagenden Einbohren, aufweisend zumindest eine auf eine Ankerstange aufgeschraubte Bohrkrone, wobei der Injektionsbohranker eine oder mehrere Kupplungsanordnungen umfasst, an welcher jeweils einzelne oder mehrere der dazu vorangehend beschriebenen Merkmale verwirklicht sind.

Die Erfindung umfasst auch ein Verfahren zur Verbindung von zwei Traggliedern, vorzugsweise von zwei Ankerstangen eines Injektionsbohrankers zum drehschlagenden Bohren, umfassend die Verfahrensschritte: Bereitstellen einer Kupplung, wobei die Kupplung eine hülsenartige Kupplungsmuffe umfasst mit von zwei gegenüberliegenden Seiten ausgehenden, jeweils mit Innengewinde versehenen Einschrauböffnungen für das Einschrauben von Traggliedern, wobei zwischen den beiden Innengewinden der Einschrauböffnungen an der Innenseite der Kupplungsmuffe ein nach radial innen weisender, sich vorzugsweise ringförmig entlang des gesamten Umfanges erstreckender, Montagevorsprung ausgebildet ist, wobei zwischen dem Montagevorsprung und den Innengewinden jeweils eine radiale, bzgl. der geometrischen Längsmittelachse der Kupplungsmuffe rotationssymmetrische, Ausnehmung ausgebildet ist, die an einen, vorzugsweise konischen, Auslauf des benachbarten Innengewindes angrenzt oder die das Innengewinde schneidet, wobei in die beiden Ausnehmungen jeweils ein elastisch deformierbarer, vorzugsweise aus Kunststoff hergestellter, Dichtring einsetzbar ist, wobei in einem unbelasteten Zustand des Dichtringes dessen Außendurchmesser größer als der Innendurchmesser des Montagevorsprunges und/oder größer als oder gleich groß wie der Kerndurchmesser des Innengewindes ist. Ausgehend von dem eingangs erläuterten Stand der Technik liegt der Erfindung insofern die Aufgabe zugrunde, ein derartiges Verfahren vorteilhaft weiterzubilden, wobei insbesondere eine Vereinfachung des Verfahrens bei zugleich erzielbarer zuverlässiger Dichtwirkung und hoher axialer Schlagsteifigkeit angestrebt wird.

Die Aufgabe wird erfindungsgemäß zunächst und im Wesentlichen in Verbindung mit den folgenden weiteren Verfahrensschritten gelöst: Bereitstellen von einem, vorzugsweise aus Metall hergestellten, Klemmring, dessen Außendurchmesser kleiner als oder gleich groß wie der Innendurchmesser des Montagevorsprunges ist, Verwendung bzw. Auswahl von Dichtringen, die jeweils eine rotationssymmetrische Anlagefläche aufweisen, die sich zur Anlage gegen eine der beiden Seitenflächen des Klemmringes in einem Radienintervall erstreckt, das bei einer zu dem Klemmring konzentrischen Ausrichtung der Dichtringe ein Radienintervall der Seitenflächen des Klemmringes geometrisch überschneidet, Einsetzen eines ersten Dichtringes in eine erste Ausnehmung, so dass dessen Anlagefläche in Richtung zu dem von dem Montagevorsprung umschlossenen hohlen Querschnitt zeigt, Einsetzen des Klemmringes in den von dem Montagevorsprung umschlossenen hohlen Querschnitt, und Einsetzen des zweiten Dichtringes in die zweite Ausnehmung, so dass dessen Anlagefläche in Richtung zu dem von dem Montagevorsprung umschlossenen hohlen Querschnitt bzw. Klemmring zeigt. Zu möglichen Wirkungen und erzielbaren Vorteilen wird auf die vorangehende Beschreibung Bezug genommen. Bevorzugt ist, dass die Dichtringe vor dem Einsetzen in die Ausnehmung oval verformt und bei dieser Formgebung in die Kupplungsmuffe eingeführt werden, wo sie in den Gewindeauslauf gedreht und die Ausnehmung eingeclipst werden.

Die Erfindung wird nachfolgend mit Bezug auf die beigefügten Figuren, welche ein bevorzugtes Ausführungsbeispiel angeben, weiter beschrieben. In den Figuren zeigt:
- Fig. 1: eine erfindungsgemäße Kupplung gemäß einem bevorzugten Ausführungsbeispiel in einer Anordnung mit zwei darin eingeschraubten Ankerstangen, jeweils halbseitig als Längsschnitt und als Längsansicht,
- Fig. 1a: eine Vergrößerung von Detail Ia aus Fig. 1,
- Fig. 2: die in Fig. 1 gezeigte Kupplungsmuffe, jeweils halbseitig als Längsschnitt und als Längsansicht mit gestrichelten verdeckten Kanten,
- Fig. 3: im Vergleich zu Fig. 1 in Vergrößerung den dort gezeigten Klemmring und die beiden dort gezeigten Dichtringe, jeweils in Schnittansicht und auseinander gezogen,
- Fig. 4: die erfindungsgemäße Kupplung gemäß Fig. 1, jedoch ohne darin eingeschraubte Ankerstangen, jeweils halbseitig als Längsschnitt und als Längsansicht,
- Fig. 4a: eine Vergrößerung von Detail IVa gemäß Fig. 4,
- Fig. 5: eine zur Verwendung der erfindungsgemäßen Kupplung geeignete Ankerstange eines Bohrinjektionsankers gemäß einem bevorzugten Ausführungsbeispiel, verkürzt dargestellt und teilweise aufgebrochen,
- Fig. 5a: eine Vergrößerung von Detail Va gemäß Fig. 5,
- Fig. 6: die in Fig. 4 gezeigte Kupplung mit nur einer darin eingeschraubten Ankerstange und
- Fig. 6a: eine Vergrößerung von Detail VIa aus Fig. 6.

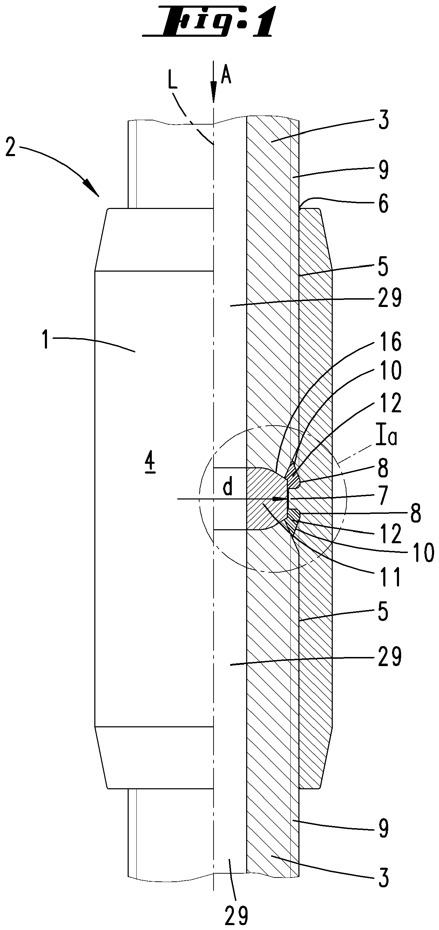

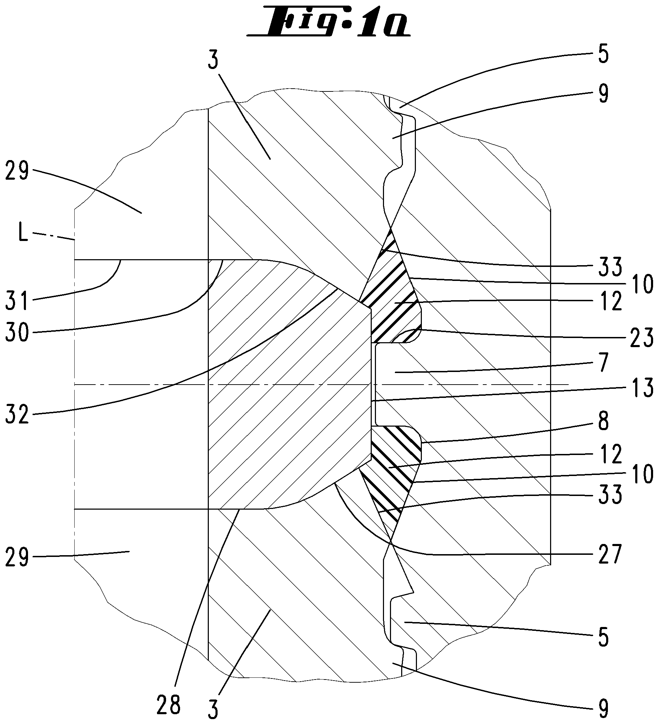

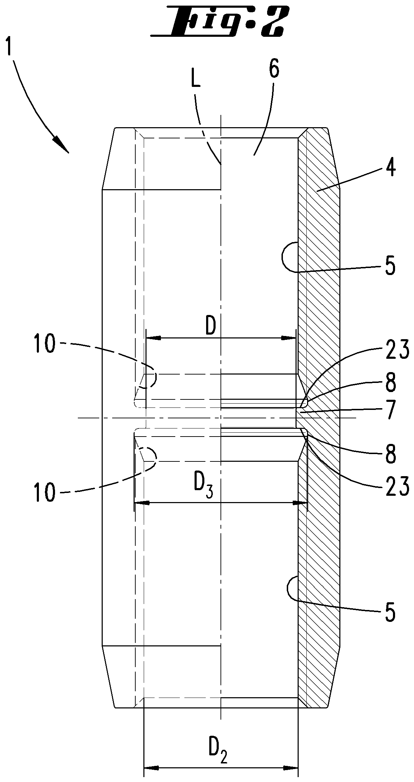

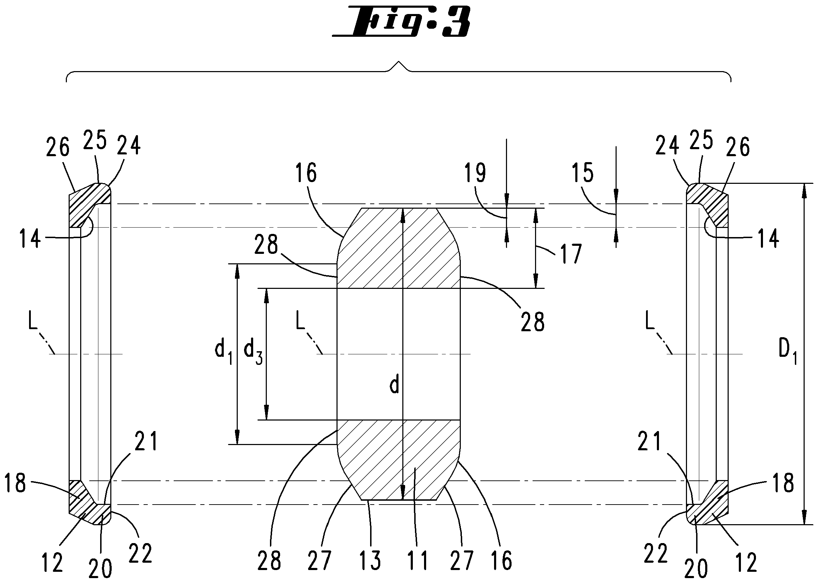

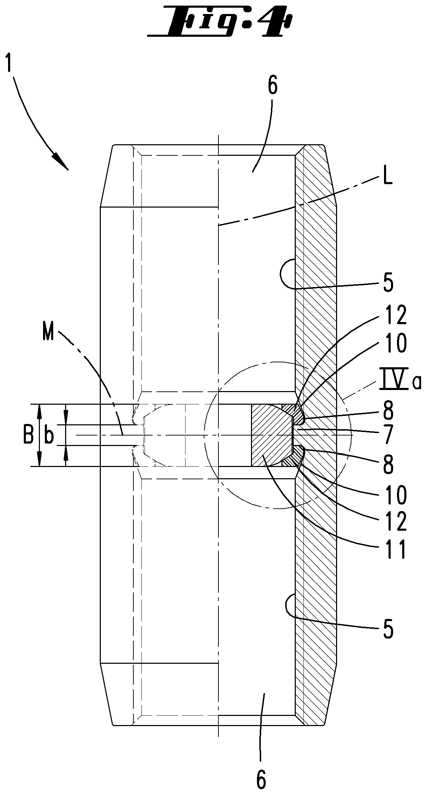

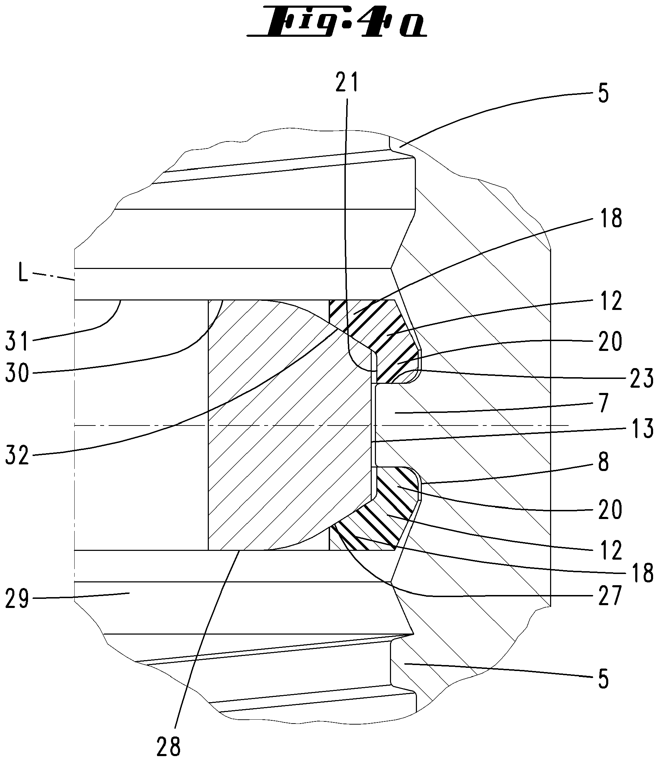

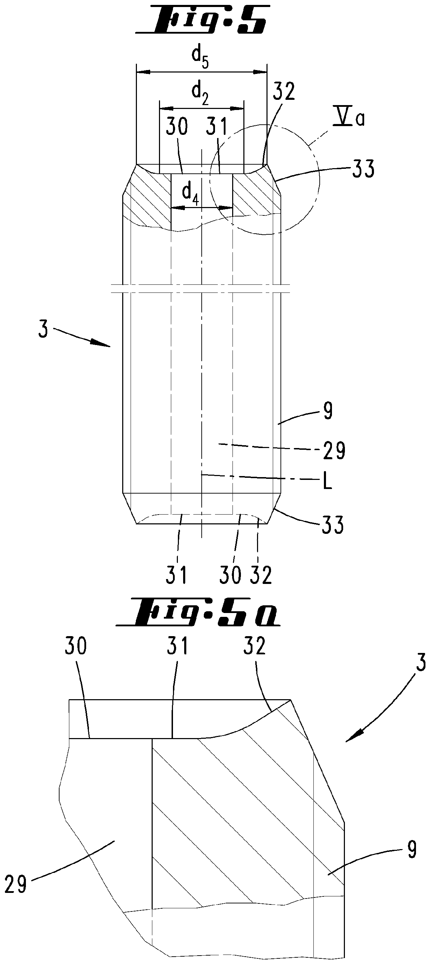

Mit Bezug auf die Figuren 1 bis 6 wird ein bevorzugtes Ausführungsbeispiel einer erfindungsgemäßen Kupplung 1 sowie exemplarisch eine im Rahmen der Erfindung bevorzugte Verwendung zur Herstellung einer Kupplungsanordnung 2, welche eine derartige Kupplung 1 und zwei darin zur Verbindung eingeschraubte Ankerstangen 3 bspw. eines Bohrinjektionsankers umfasst, vorgestellt. Dazu zeigen die Figuren 4, 4a die Kupplung 1 in einem vormontierten Zustand, während die Figuren 2 und 3 die Komponenten der Kupplung 1 vor der Vormontage zeigen. Demgemäß umfasst die Kupplung 1 eine hülsenartige Kupplungsmuffe 4 mit von zwei gegenüberliegenden Seiten ausgehenden, jeweils mit Innengewinde 5 versehenen Einschrauböffnungen 6 zum Einschrauben von Traggliedern, bspw. von je einer der in Fig. 5, 5a gezeigten Ankerstangen 3. Zwischen den beiden Innengewinden 5 ist an der Innenseite der Kupplungsmuffe 4 ein nach radial innen weisender, sich ringförmig entlang des gesamten Umfanges erstreckender Montagevorsprung 7 ausgebildet. Zwischen dem Montagevorsprung 7 und den beiden Innengewinden 5 befindet sich, jeweils angrenzend an den Montagevorsprung 7, je eine bzgl. der geometrischen Längsmittelachse L rotationssymmetrische radiale Ausnehmung 8. Diese grenzt einseitig an den Montagevorsprung 7 und in Richtung der Längsmittelachse L bzw. axial gegenüber an einen konischen Auslauf 10 des benachbarten Innengewindes 5 an. Die Kupplung 1 umfasst des Weiteren einen Klemmring 11 und zwei zueinander identische Dichtringe 12. Da der Klemmring 11 und die Dichtringe 12 rotationssymmetrisch sind, genügt zu ihrer Darstellung die jeweils in Fig. 3 gewählte Schnittansicht durch das Zentrum. Die Darstellung des vormontierten Zustandes der Kupplung 1 gemäß Fig. 4, 4a zeigt, dass die Breite B des Klemmringes 11 in dem Beispiel das etwa Dreifache der Breite b des Montagevorsprunges 7 beträgt. Der Klemmring 11 weist in seinem in Bezug auf die Längsmittelachse L mittleren Abschnitt eine zylindrische Außenfläche 13 auf, deren Außendurchmesser d in dem Beispiel geringfügig kleiner als der Innendurchmesser D des Montagevorsprunges 7 gewählt wurde. Des Weiteren ist der Außendurchmesser D₁ der beiden Dichtringe 12 in dem in Fig. 3 gezeigten unverformten Zustand größer als der Innendurchmesser D des Montagevorsprunges 7 und in dem Beispiel größer als der Kerndurchmesser D₂ des Innengewindes 5. Um ausgehend von dem in den Figuren 2, 3 gezeigten zerlegten Zustand der Kupplung 1 zu dem in den Figuren 4, 4a gezeigten vormontierten Gebrauchszustand zu gelangen, wurde zunächst einer der beiden aus elastisch verformbarem Kunststoff hergestellten Dichtringe 1 ausgehend von seiner unbelasteten Kreisform mittels einer Druckkraft zwischen zwei Fingern oval verformt und durch eine der beiden Einschrauböffnungen 6 der Kupplungsmuffe 4 in deren hohles Innere geführt, dort in einen zu der Längsmittelachse L senkrechten Querschnitt geschwenkt und im Zuge der elastischen Rückverformung in die dortige Ausnehmung 8 eingeclipst. Anschließend wurde der Klemmring 11 durch die gegenüberliegende Einschrauböffnung 6 in die Kupplungsmuffe 4 bis etwa zu der in Fig. 4 gezeigten Position eingeführt, in der der von dem Klemmring 11 aufgespannte Hohlquerschnitt bzw. Ringquerschnitt senkrecht zu der Längsmittelachse L liegt und in welcher der Klemmring 11 in Richtung der Längsmittelachse L etwa mittensymmetrisch zu dem Montagevorsprung 7 positioniert ist und sich ausgehend von einer geometrischen Mittellinie M zu beiden Seiten bis in den Bereich der Ausläufe 10 der Innengewinde 5 erstreckt. Anschließend wurde der verbleibende Dichtring 12 in entsprechender Weise durch die besagte gegenüberliegende Einschrauböffnung 6 in die Kupplungsmuffe 4 geführt und darin in die für ihn verbleibende Ausnehmung 8 eingeclipst. Zufolge der beschriebenen Durchmesserbeziehungen sind die beiden Dichtringe 12 in Richtung der Längsmittelachse L durch den gebildeten Formschluss beidseitig axial verliersicher aufgenommen. Die beiden Dichtringe 12 weisen jeweils eine rotationssymmetrische Anlagefläche 14 (vgl. Fig. 3) auf, die sich zur Anlage gegen eine der beiden Seitenflächen 16 des Klemmringes 11 in einem Radienintervall 15 erstreckt, das bei der gezeigten, zu dem Klemmring 11 konzentrischen Ausrichtung der Dichtringe 12 ein Radienintervall 17 der Seitenflächen 16 des Klemmringes 11 geometrisch teilweise überschneidet (vgl. Fig. 3). Dies bewirkt, dass in dem vormontierten Zustand der Figuren 4, 4a auch der Klemmring 11 zwischen den beiden Dichtringen 12 axial bzw. in Richtung der Längsmittelachse L verliersicher in der Kupplungsmuffe 4 gehalten ist, obwohl dieser mit geringem radialem Bewegungsspiel in dem Hohlquerschnitt des Montagevorsprunges 7 aufgenommen ist. Der größte Durchmesser D₃ der Ausnehmung 8 entspricht im Wesentlichen dem Außendurchmesser D₁ der Dichtringe 12, so dass diese im Wesentlichen ohne radiales Bewegungsspiel in der Kupplungsmuffe 4 gehalten sind. Andererseits ergibt sich in dem Beispiel für die gewählte Form und Größe des in Fig. 3 gezeigten Profilquerschnitts der Dichtringe 12 in Verbindung mit der axialen Erstreckung der Ausnehmung 8 und den Ausläufen 10 der Innengewinde 5, dass die beiden Dichtringe 12 in dem vormontierten Zustand in Richtung der Längsmittelachse L bzw. axial noch ein begrenztes Bewegungsspiel besitzen, wodurch insbesondere das Einclipsen erleichtert wird. Gemäß dem in Fig. 3 (und bspw. in Fig. 4a) gezeigten Profilquerschnitt der Dichtringe 12 besitzen diese jeweils einen radial inneren Ringabschnitt 18, der auf seiner zu dem Montagevorsprung bzw. zu dem Klemmring 11 hin weisenden Seite von der besagten Anlagefläche 14 berandet wird. In Fig. 3 ist als radiales Überschneidungsintervall 19 der radiale Überschneidungsbereich zwischen den Radienintervallen 15 und 17 dargestellt. In dem Überschneidungsintervall 19 sind in dem Beispiel die Anlagefläche 14 der Dichtringe 12 und die Seitenflächen 16 des Klemmringes 11 jeweils konisch mit einander betragsmäßig entsprechender Neigung bzw. Steigung ausgeführt, so dass zufolge dieser korrespondierenden Formgebung eine flächige Abstützung resultiert. Die beiden Dichtringe 12 besitzen je einen an den inneren Ringabschnitt 18 anschließenden, radial äußeren Ringabschnitt 20, der von einer zylindrischen Innenfläche 21 berandet wird, die abknickend in die Anlagefläche 14 übergeht. An dem äußeren Ringabschnitt 20 grenzt die Innenfläche 21 an eine stirnseitige Seitenfläche 22 zur Abstützung gegen eine stirnseitige Seitenfläche 23 des Montagevorsprunges 7 an, wobei die Seitenflächen 22, 23 des äußeren Ringabschnittes 20 und des Montagevorsprunges 7 in den in den Figuren 2, 3 gezeigten Profilquerschnitten jeweils senkrecht zu der geometrischen Längsmittelachse L verlaufen, so dass eine flächige Abstützung möglich ist. An dem äußeren Ringabschnitt 20 geht die stirnseitige Seitenfläche 22 in einer Rundung 24 in eine kurze zylindrische Außenfläche 25 über, wobei die Außenfläche 25 und die Rundung 24 einerseits sowie die an die Seitenfläche 23 des Montagevorsprunges 7 anschließende Fläche der Ausnehmung 8 ebenfalls korrespondierende Querschnittsprofile zur Erzielung einer durchgehenden flächigen Abstützung aufweisen. An dem äußeren Ringabschnitt 20 geht die Außenfläche 25 in ihrem weiteren Verlauf in eine dazu geneigte Rückenfläche 26 über, die sich bzgl. der geometrischen Längsmittelachse L konisch erstreckt. Dabei ist in dem in den Figuren 2, 3 gezeigten, quer zu der Umfangsrichtung orientierten Querschnitt die Rückenfläche 26 zu der geometrischen Längsmittelachse L stärker als der konische Auslauf 10 der Innengewinde 5 geneigt, so dass ein zu den Seiten hin zunehmendes Rückenspiel resultiert.

Fig. 3 zeigt außerdem, dass die sich gegenüberliegenden stirnseitigen Seitenflächen 16 des Klemmringes 11 in einem jeweils radial äußeren Ringflächenbereich 27 konisch verlaufen und gerundet in einen radial inneren Ringflächenbereich 28, der sich gerade und senkrecht zu der geometrischen Längsmittelachse L erstreckt, übergehen. Auch ist vorgesehen, dass sich der äußere Ringflächenbereich 27 nach radial innen bis über das Radienintervall 15 der Anlagefläche 14 des Dichtringes 12 hinaus erstreckt.

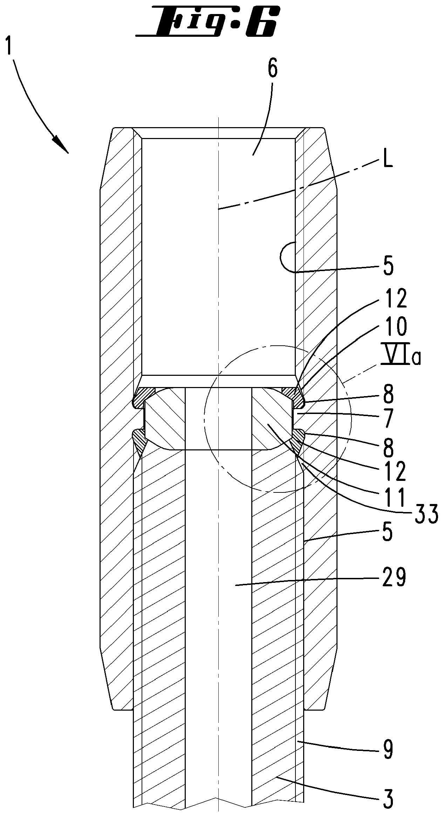

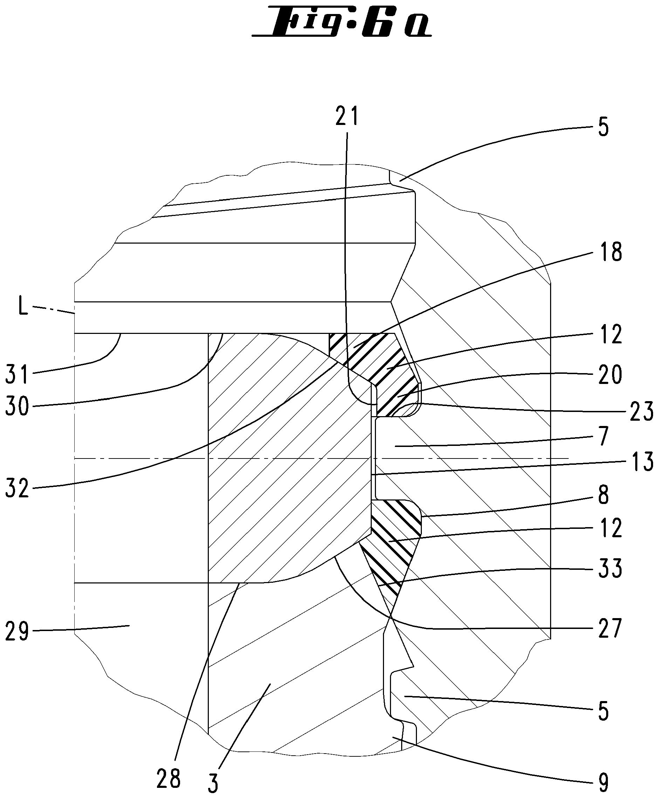

Ausgehend von dem in den Figuren 4, 4a gezeigten vormontierten Gebrauchszustand kann die erfindungsgemäße Kupplung 1 zur Verbindung von zwei Traggliedern, bspw. von zwei der in den Figuren 5, 5a dargestellten Ankerstangen 3, verwendet werden. Derartige, an sich bekannte Ankerstangen 3 besitzen einen entlang ihrer geometrischen Längsmittelachse L durchlaufenden Mittelkanal 29, der sich zwischen beiden Stirnseiten erstreckt. Im Bereich dieser Stirnseiten und in dem gewählten Beispiel auch durchlaufend trägt der äußere Mantel ein Außengewinde 9, bei welchem es sich bspw. um ein aufgewalztes Grobgewinde handeln kann. Das Innengewinde 5 der Kupplungsmuffe 4 ist auf das Außengewinde 9 zur Erzielung einer Schraubverbindung abgestimmt. Die Figuren 5, 5a zeigen, dass die Stirnflächen 30 der Ankerstangen 3 jeweils einen radial inneren, ebenen und zu der geometrischen Längsmittelachse L senkrechten Stirnflächenbereich 31 und einen dazu radial äußeren Stirnflächenbereich 32 besitzen, der nach radial außen hin zunehmend in Richtung der geometrischen Längsmittelachse L der Ankerstange 3 über den inneren ebenen Stirnflächenbereich 31 übersteht. Ein Vergleich der Figuren 3 und 5 und auch die Figuren 1, 1a und 6, 6a zeigen, das der radial äußere Stirnflächenbereich 32 der Ankerstange 3 und der radial äußere Ringflächenbereich 27 des Klemmringes 11 in dem Profilquerschnitt mit jeweils gleicher Neigung in Bezug auf die geometrische Längsmittelachse L der Kupplung 1 verlaufen. Mithin ist ihre Formgebung in der Weise aufeinander abgestimmt, dass beim Einschrauben der Ankerstangen 3 in die Kupplung 1 eine flächige Abstützung der radial äußeren Stirnflächenbereiche 32 gegen den radial äußeren Ringflächenbereich 27 des Klemmrings 11 resultiert. Dabei ist vorgesehen, dass der Außendurchmesser d₁ der planparallelen inneren Ringflächenbereiche 28 des Klemmrings 11 dem Außendurchmesser d₂ der ebenen, radial inneren Stirnflächenbereiche 31 der Ankerstangen 3 entspricht und dass der Innendurchmesser d₃ der planparallelen inneren Ringflächenbereiche 28 des Klemmrings 22 gleich dem Innendurchmesser d₄ der radial inneren Stirnflächenbereiche 31 der Ankerstangen 3 ist. Der Außendurchmesser d₅ des axial vorspringenden äußeren Stirnflächenbereiches 32 der Ankerstangen 3, an welchem der maximale axiale Vorsprung besteht, liegt innerhalb des Radienintervalls 15, in welchem sich die Anlagefläche 14 der Dichtringe 14 in deren unverformtem Zustand erstreckt.

Ausgehend von dem vormontierten Gebrauchszustand gemäß den Figuren 4, 4a zeigen die Figuren 6, 6a einen Zwischenschritt, der im Weiteren zur Herstellung bzw. Montage der in den Figuren 1, 1a gezeigten Kupplungsanordnung 2 führt. Dazu wurde in die vormontierte Kupplung 1 zunächst nur in deren eine Einschrauböffnung 6 eine Ankerstange 3 so weit eingeschraubt, bis deren Stirnfläche 30 gegen die Seitenfläche 16 des Klemmrings 11 tritt. Zufolge der beschriebenen Durchmesserbeziehungen tritt die Stirnfläche 30 sowohl mit ihrem inneren Stirnflächenbereich 31, als auch mit ihrem dazu äußeren, axial vorspringenden Stirnflächenbereich 32 flächig gegen die korrespondierend geformten Ringflächenbereiche 28 und 27 der Seitenfläche 16 von Klemmring 11. Die Ankerstange 3 besitzt an den Längsenden radial außerhalb der Stirnflächenbereiche 32 eine Fase 33. Diese drückt sich beim Einschrauben der Ankerstange 3 axial und von radial innen gegen den radial inneren Ringabschnitt 18 des Dichtringes 12, so dass dieser radial aufgeweitet und in die Ausnehmung 8 eingepresst wird. Die erste Ankerstange 3 wird vorzugsweise zunächst so weit in die Kupplungsmuffe 4 eingeschraubt, bis der sich gegen den Montagevorsprung 7 abstützende Dichtring 12 bei der gewählten Einschraubkraft keine weitere Verformung zulässt. Dies entspricht dem in den Figuren 6, 6a gezeigten Zwischenschritt. Um zu der in den Figuren 1, 1a gezeigten Kupplungsanordnung 2 zu gelangen, wird eine weitere, vorzugsweise eine entsprechende, Ankerstange 3 in die verbleibende Einschrauböffnung 6 eingeschraubt, wobei auch der dortige Dichtring 12 deformiert wird. Die Figuren zeigen, dass sich die beiden Ankerstangen 3 nun mittels des ebenfalls aus Stahl hergestellten Klemmringes 11 gegeneinander abstützen und sich mittels der beiden Innengewinde 5 in gewünschter Stärke bzw. Kraft gegeneinander verspannen lassen. Die Dichtringe 12 liegen außerhalb des axialen Kraftflusses, der bspw. beim Aufbringen einer in Fig. 1 mit A bezeichneten axialen Schlagkraft von einer Ankerstange 3 direkt durch den Klemmring 11 zu der benachbarten Ankerstange 3 führt. Die in Fig. 1, 1a gezeigte Kupplungsanordnung kann bei Bedarf durch zusätzliche Ankerstangen 3 und Kupplungen 1 ergänzt werden. Ebenso erkennt ein Fachmann, dass sich eine solche Anordnung aus Kupplungen 1 und Ankerstangen 3 zu einem Bohrinjektionsanker vervollständigen lässt, indem auf ein freies Längsende der vordersten Ankerstange 3 eine bspw. mit dazu passendem Innengewinde ausgestattete, an sich bekannte, Bohrkrone (in den Figuren nicht mit dargestellt) aufgeschraubt wird. An dem der Bohrkrone in Richtung der geometrischen Längsmittelachse L entgegengesetzten Längsende des Bohrinjektionsankers kann ein bspw. ebenfalls mit dazu passendem Innengewinde versehener Bohrantrieb angeschlossen werden, mittels welchem ein Drehmoment und bei Bedarf zusätzlich eine pulsierende Axialkraft bzw. Schlagenergie auf den Bohrinjektionsanker übertragen werden kann, um diesen in den Untergrund einzubringen.

## Patentansprüche

1. Kupplung (1) für das Verbinden von mit Außengewinde versehenen Traggliedern, insbesondere für das Verbinden von Ankerstangen (3) von Injektionsbohrankern zum drehschlagenden Bohren, wobei die Kupplung (1) eine hülsenartige Kupplungsmuffe (4) umfasst mit von zwei gegenüberliegenden Seiten ausgehenden, jeweils mit Innengewinde (5) versehenen Einschrauböffnungen (6) für das Einschrauben von mit Außengewinde (9) versehenen Traggliedern,
wobei zwischen den beiden Innengewinden (5) der Einschrauböffnungen (6) an der Innenseite der Kupplungsmuffe (4) ein nach radial innen weisender, sich insbesondere ringförmig entlang des gesamten Umfangs erstreckender, Montagevorsprung (7) ausgebildet ist,
wobei zwischen dem Montagevorsprung (7) und den Innengewinden (5) jeweils eine radiale, bezüglich der geometrischen Längsmittelachse der Kupplungsmuffe rotationssymmetrische, Ausnehmung (8) ausgebildet ist, die an einen, insbesondere konischen, Auslauf (10) des benachbarten Innengewindes (5) angrenzt oder die das Innengewinde (5) schneidet, wobei in die beiden Ausnehmungen (8) jeweils ein elastisch deformierbarer, insbesondere aus Kunststoff hergestellter, Dichtring (12) eingesetzt oder einsetzbar ist und
wobei in einem unbelasteten Zustand der Dichtringe deren Außendurchmesser (D₁) größer als der Innendurchmesser (D) des Montagevorsprunges (7) und/oder größer als der Kerndurchmesser (D₂)des Innengewindes (5) ist,
**dadurch gekennzeichnet,**
**dass** die Kupplung (1) einen, insbesondere aus Metall hergestellten, Klemmring (11) aufweist, dessen Außendurchmesser (d) kleiner als oder gleich groß wie der Innendurchmesser (D) des Montagevorsprunges (7) ist, und
**dass** die Dichtringe (12) jeweils eine rotationssymmetrische Anlagefläche (14) aufweisen, die sich zur Anlage gegen eine der beiden Seitenflächen (16) des Klemmringes (11) in einem Radienintervall (15) erstreckt, das bei einer zu dem Klemmring (11) konzentrischen Ausrichtung der Dichtringe (12) ein Radienintervall (17) der Seitenflächen (16) des Klemmringes (11) geometrisch teilweise überschneidet.

2. Kupplung (1) nach Anspruch 1, **dadurch gekennzeichnet, dass** der Klemmring (11) als von der Kupplungsmuffe (4) separates Bauteil hergestellt ist.

3. Kupplung (1) nach einem oder mehreren der vorangehenden Ansprüche,
**dadurch gekennzeichnet, dass** der Klemmring (11) lose in den Hohlquerschnitt des Montagevorsprunges (7) eingesetzt ist oder fest an dem Montagevorsprung (7) befestigt, insbesondere darin eingepresst oder eingeschweißt, ist.

4. Kupplung (1) nach einem oder mehreren der vorangehenden Ansprüche,
**dadurch gekennzeichnet, dass** die in je eine Ausnehmung (8) eingesetzten Dichtringe (12) in unbelastetem Zustand entlang ihres gesamten Umfanges oder zumindest umfangsbereichsweise in der Ausnehmung (8) in zu der geometrischen Längsmittelachse (L) paralleler Richtung ohne oder mit nur geringem Bewegungsspiel formschlüssig gehalten sind.

5. Kupplung (1) nach einem oder mehreren der vorangehenden Ansprüche,
**dadurch gekennzeichnet, dass** die Dichtringe (12) je einen radial inneren Ringabschnitt (18) aufweisen, der auf seiner einen Seite von der Anlagefläche (14) für den Klemmring (11) berandet wird und dass die Dichtringe (12) je einen an den inneren Ringabschnitt (18) anschließenden, radial äußeren Ringabschnitt (20) aufweisen, der von einer zylindrischen oder im Wesentlichen zylindrischen Innenfläche (21) berandet wird, die geneigt oder gerundet in die Anlagefläche (14) übergeht.

6. Kupplung (1) nach einem oder mehreren der vorangehenden Ansprüche,
**dadurch gekennzeichnet, dass** zumindest in dem radialen Überschneidungsintervall (19) die Anlagefläche (14) des Dichtringes (12) und die Seitenfläche (16) des Klemmringes (11) eine aufeinander zur Erzielung einer flächigen Abstützung angepasste, insbesondere zumindest bereichsweise konische und/oder im Profilquerschnitt gerundete, Formgebung aufweisen.

7. Kupplung (1) nach Anspruch 5 und insbesondere nach Anspruch 6, **dadurch gekennzeichnet, dass** an dem äußeren Ringabschnitt (20) die Innenfläche (21) an eine stirnseitige Seitenfläche (22) zur Abstützung gegen eine stirnseitige Seitenfläche (23) des Montagevorsprunges (7) angrenzt, wobei die Seitenflächen (22, 23) des äußeren Ringabschnittes (20) und des Montagevorsprunges (7) eine aufeinander zur Erzielung einer flächigen Abstützung angepasste Formgebung aufweisen und sich insbesondere in Radialrichtung quer zur der geometrischen Längsmittelachse (L) erstrecken.

8. Kupplung (1) nach Anspruch 7, **dadurch gekennzeichnet, dass** an dem äußeren Ringabschnitt (20) die stirnseitige Seitenfläche, insbesondere mit einer Rundung, in eine Außenfläche (25) übergeht, wobei die Außenfläche (25) des äußeren Ringabschnittes (20), und insbesondere die daran anschließende Rundung (24), sowie die an die Seitenfläche (23) des Montagevorsprunges (7) anschließende Mantelfläche der Ausnehmung (8) eine aufeinander zur Erzielung einer durchgehenden flächigen Abstützung angepasste Formgebung aufweisen.

9. Kupplung (1) nach Anspruch 8, **dadurch gekennzeichnet, dass** an dem äußeren Ringabschnitt (20) die Außenfläche (25) in eine dazu geneigte Rückenfläche (26) übergeht, wobei in einem quer zu der Umfangsrichtung orientierten Querschnitt die Rückenfläche (26) zu der geometrischen Längsmittelachse (L) stärker geneigt als der konische Auslauf (10) des Innengewindes (5) verläuft.

10. Kupplung (1) nach einem oder mehreren der vorangehenden Ansprüche,
**dadurch gekennzeichnet, dass** in einem vormontierten Zustand der Kupplung (1), bei welchem die beiden Dichtringe (12) in die Ausnehmungen (8) eingesetzt sind und sich der Klemmring (11) zwischen den beiden Dichtringen (12) befindet, der Klemmring (11) relativ zu der Kupplungsmuffe (4) in zu der geometrischen Längsmittelachse (L) paralleler Richtung mit nur geringem Bewegungsspiel oder ohne Bewegungsspiel gehalten ist.

11. Kupplung (1) nach einem oder mehreren der vorangehenden Ansprüche,
**dadurch gekennzeichnet, dass** der Innendurchmesser (D) des Montagevorsprunges (7) kleiner als oder etwa gleich groß wie der Kerndurchmesser (D₂) des Innengewindes ist.

12. Kupplung (1) nach einem oder mehreren der vorangehenden Ansprüche,
**dadurch gekennzeichnet, dass** die sich gegenüber liegenden stirnseitigen Seitenflächen (16) des Klemmringes (11) in einem radial äußeren Ringflächenbereich (27) konisch und/oder konvex gerundet verlaufen und in einem radial inneren Ringflächenbereich (28) senkrecht zur geometrischen Längsmittelachse (L) und zueinander planparallel verlaufen, wobei der radial äußere Ringflächenbereich (27) gerundet in den radial inneren Ringflächenbereich (28) übergeht.

13. Kupplungsanordnung (2), umfassend zumindest eine Kupplung (1) gemäß einem oder mehreren der vorangehenden Ansprüche, **dadurch gekennzeichnet, dass** in die Kupplungsmuffe (4) von beiden Seiten je eine einen durchgehenden Mittelkanal (29) aufweisende und mit, insbesondere in Längsrichtung (L) durchgehendem, Außengewinde (9) versehene Ankerstange (3) für Injektionsbohranker bis zur Abstützung und insbesondere Verspannung der Stirnfläche (30) der Ankerstange gegen die jeweils zugewandte Seitenfläche des Klemmringes eingeschraubt ist.

14. Kupplungsanordnung (2) nach dem vorangehenden Anspruch, **dadurch gekennzeichnet, dass** die Stirnfläche (30) der Ankerstange (3) einen radial inneren, ebenen Stirnflächenbereich (31) aufweist und einen dazu radial äußeren Stirnflächenbereich (32), der nach radial außen hin zunehmend in Richtung der geometrischen Längsmittelachse (L) der Ankerstange (3) über den inneren ebenen Stirnflächenbereich übersteht und dass der radial äußere Stirnflächenbereich (32) der Ankerstange (3) und der radial äußere Ringflächenbereich (27) des Klemmringes (11) eine aufeinander zur Erzielung einer zumindest in einem begrenzten Radienintervall flächigen Abstützung abgestimmte konische und/oder im Profilquerschnitt gewölbte Formgebung aufweisen.

15. Kupplungsanordnung (2) nach Anspruch 14 und nach zumindest Anspruch 12, **dadurch gekennzeichnet, dass** der Außendurchmesser (d₁) der planparallelen inneren Ringflächenbereiche (28) des Klemmringes (11), zumindest in etwa, dem Außendurchmesser (d₂) der ebenen, radial inneren Stirnflächenbereiche (31) der Ankerstangen (3) entspricht und/oder dass der Innendurchmesser (d₃) der planparallelen inneren Ringflächenbereiche (28) des Klemmringes (11), zumindest etwa, gleich dem oder kleiner als der Innendurchmesser (d₄) der radial inneren Stirnflächenbereiche (31) der Ankerstangen (3) ist.

16. Kupplungsanordnung (2) nach Anspruch 14 und insbesondere nach Anspruch 15, **dadurch gekennzeichnet, dass** der Außendurchmesser (d₅) des radial äußeren Stirnflächenbereichs (32) der Ankerstangen (3) innerhalb des Radienintervalls (15) liegt, in welchem sich die Anlagefläche (14) der Dichtringe (12) in deren unverformtem Zustand erstreckt.

17. Injektionsbohranker, insbesondere zum drehschlagenden Bohren, aufweisend zumindest eine auf eine Ankerstange aufgeschraubte Bohrkrone, **dadurch gekennzeichnet, dass** der Injektionsbohranker zumindest eine Kupplungsanordnung gemäß einem oder mehreren der vorangehenden Ansprüche aufweist.

18. Verfahren zur Verbindung von zwei Traggliedern, insbesondere von zwei Ankerstangen (3) eines Injektionsbohrankers zum drehschlagenden Bohren, umfassend die Verfahrensschritte:
Bereitstellen einer Kupplung (1), wobei die Kupplung (1) eine hülsenartige Kupplungsmuffe (4) umfasst mit von zwei gegenüberliegenden Seiten ausgehenden, jeweils mit Innengewinde (5) versehenen Einschrauböffnungen (6) für das Einschrauben von Traggliedern,
wobei zwischen den beiden Innengewinden (5) der Einschrauböffnungen (6) an der Innenseite der Kupplungsmuffe (4) ein nach radial innen weisender, sich insbesondere ringförmig entlang des gesamten Umfangs erstreckender, Montagevorsprung (7) ausgebildet ist,
wobei zwischen dem Montagevorsprung (7) und den Innengewinden (5) jeweils eine radiale, bezüglich der geometrischen Längsmittelachse (L) der Kupplungsmuffe (4) rotationssymmetrische, Ausnehmung (8) ausgebildet ist, die an einen, insbesondere konischen, Auslauf (10) des benachbarten Innengewindes (5) angrenzt oder die das Innengewinde (5) schneidet,
wobei in die beiden Ausnehmungen (10) jeweils ein elastisch deformierbarer, insbesondere aus Kunststoff hergestellter, Dichtring (12) einsetzbar ist,
wobei in einem unbelasteten Zustand des Dichtringes (12) dessen Außendurchmesser (D₁) größer als der Innendurchmesser (D) des Montagevorsprunges (7) und/oder größer als der Kerndurchmesser (D₂) des Innengewindes (5) ist,
**gekennzeichnet durch** die Verfahrensschritte:
Bereitstellen von einem, insbesondere aus Metall hergestellten, Klemmring (11), dessen Außendurchmesser (d) kleiner als oder gleich groß wie der Innendurchmesser (D) des Montagevorsprunges (7) ist,
Verwendung von Dichtringen (12), die jeweils eine rotationssymmetrische Anlagefläche (14) aufweisen, die sich zur Anlage gegen eine der beiden Seitenflächen (16) des Klemmringes (11) in einem Radienintervall (15) erstreckt, das bei einer zu dem Klemmring (11) konzentrischen Ausrichtung der Dichtringe (12) ein Radienintervall (17) der Seitenflächen (16) des Klemmringes (11) geometrisch teilweise überschneidet,
Einsetzen eines ersten Dichtringes (12) in eine erste Ausnehmung (8), so dass dessen Anlagefläche (14) in Richtung zu dem von dem Montagevorsprung (7) umschlossenen Querschnitt zeigt,
Einsetzen des Klemmringes (11) in den von dem Montagevorsprung (7) umschlossenen Querschnitt, und
Einsetzen des zweiten Dichtringes (12) in die zweite Ausnehmung (8), so dass dessen Anlagefläche (14) in Richtung zu dem von dem Montagevorsprung (7) umschlossenen Querschnitt zeigt.

19. Verfahren gemäß dem vorangehenden Verfahrensanspruch, **dadurch gekennzeichnet, dass** die Dichtringe (12) vor dem Einsetzen in die Ausnehmung (8) oval verformt werden.

## Claims

1. Coupling (1) for connecting support members provided with external threads, in particular for connecting anchor rods (3) of injection drill anchors for rotary-percussive drilling, the coupling (1) comprising a sleeve-like coupling box (4) that has screw-in openings (6), issuing from two opposing sides and each provided with internal threads (5), for screwing in support members provided with external threads (9),
a mounting projection (7), which faces radially inwards and extends in particular annularly along the entire periphery, being formed between the two internal threads (5) of the screw-in openings (6) on the inside of the coupling box (4),
a radial recess (8), which is rotationally symmetrical in relation to the geometric central longitudinal axis of the coupling box, being formed in each case between the mounting projection (7) and the internal threads (5), which recess adjoins an in particular conical runout (10) of the adjacent internal thread (5) or cuts the internal thread (5),
an elastically deformable sealing ring (12), in particular made of plastics material, being inserted or insertable into the two recesses (8) in each case, and,
when the sealing rings are unstressed, the outer diameter (D₁) thereof being larger than the inner diameter (D) of the mounting projection (7) and/or larger than the core diameter (D₂) of the internal thread,
**characterised**
**in that** the coupling (1) comprises a clamping ring (11), in particular made of metal, the outer diameter (d) of which is smaller than or equal to the inner diameter (D) of the mounting projection (7), and
**in that** the sealing rings (12) each comprise a rotationally symmetrical contact surface (14) that extends in a radius interval (15) for abutment against one of the two side surfaces (16) of the clamping ring (11), which radius interval, when the sealing rings (12) are oriented concentrically to the clamping ring (11), geometrically overlaps, in part, a radius interval (17) of the side surfaces (16) of the clamping ring (11).

2. Coupling (1) according to claim 1, **characterised in that** the clamping ring (11) is produced as a component that is separate from the coupling box (4).

3. Coupling (1) according to one or more of the preceding claims, **characterised in that** the clamping ring (11) is loosely inserted into the hollow cross section of the mounting projection (7) or is rigidly fastened to the mounting projection (7), in particular pressed or welded therein.

4. Coupling (1) according to one or more of the preceding claims, **characterised in that** the sealing rings (12) inserted into each recess (8) are, when unstressed, positively held along the entire periphery thereof or at least in regions of the periphery in the recess (8) without or with only a small amount of clearance of motion in the direction parallel to the geometric central longitudinal axis (L).

5. Coupling (1) according to one or more of the preceding claims, **characterised in that** the sealing rings (12) each have a radially inner annular portion (18) that is bordered, on one side thereof, by the contact surface (14) for the clamping ring (11) and **in that** the sealing rings (12) each comprise a radially outer annular portion (20) that adjoins the inner annular portion (18) and is bordered by a cylindrical or substantially cylindrical inner surface (21), which transitions into the contact surface (14) in an inclined or rounded manner.

6. Coupling (1) according to one or more of the preceding claims, **characterised in that**, at least in the radial overlap interval (19), the contact surface (14) of the sealing ring (12) and the side surface (16) of the clamping ring (11) have a matched shape for achieving support across the surface, which shape is in particular conical and/or rounded in profile cross section at least in regions.

7. Coupling (1) according to claim 5 and in particular according to claim 6, **characterised in that**, on the outer annular portion (20), the inner surface (21) abuts an end side surface (22) for support against an end side surface (23) of the mounting projection (7), the side surfaces (22, 23) of the outer annular portion (20) and the mounting projection (7) having a matched shape for achieving support across the surface and extending in particular in the radial direction transversely to the geometric central longitudinal axis (L).

8. Coupling (1) according to claim 7, **characterised in that**, on the outer annular portion (20), the end side surface, in particular having a curve, transitions into an outer surface (25), the outer surface (25) of the outer annular portion (20), and in particular the adjoining curve (24), and the peripheral surface of the recess (8) that adjoins the side surface (23) of the mounting projection (7) having a matched shape for achieving continuous support across the surface.

9. Coupling (1) according to claim 8, **characterised in that**, on the outer annular portion (20), the outer surface (25) transitions into a rear surface (26) inclined thereto, the rear surface (26) being, in a cross section oriented transversely to the peripheral direction, more sharply inclined in relation to the geometric central longitudinal axis (L) than the conical runout (10) of the internal thread (5).

10. Coupling (1) according to one or more of the preceding claims, **characterised in that**, in a preassembled state of the coupling (1), in which the two sealing rings (12) are inserted into the recesses (8) and the clamping ring (11) is positioned between the two sealing rings (12), the clamping ring (11) is held so as to have only a small amount of clearance of motion or no clearance of motion relative to the coupling box (4) in the direction parallel to the geometric central longitudinal axis (L).

11. Coupling (1) according to one or more of the preceding claims, **characterised in that** the inner diameter (D) of the mounting projection (7) is smaller than or approximately equal to the core diameter (D₂) of the internal thread.

12. Coupling (1) according to one or more of the preceding claims, **characterised in that** the opposing end side surfaces (16) of the clamping ring (11) extend in a radially outer annular surface region (27) in a conically and/or convexly rounded manner and extend in a radially inner annular surface region (28) perpendicularly to the geometric central longitudinal axis (L) and in plane-parallel with one another, the radially outer annular surface region (27) transitioning in a rounded manner into the radially inner annular surface region (28).

13. Coupling arrangement (2), comprising at least one coupling (1) according to one or more of the preceding claims, **characterised in that** in each case one anchor rod (3) for an injection drill anchor, which rod is provided with an external thread (9), which is in particular continuous in the longitudinal direction (L), and comprises a continuous central channel (29), is screwed into the coupling box (4) from both sides until the end surface (30) of the anchor rod is supported and in particular braced against the facing side surface of the clamping ring in each case.

14. Coupling arrangement (2) according to the preceding claim, **characterised in that** the end surface (30) of the anchor rod (3) comprises a radially inner, planar end surface region (31) and in addition a radially outer end surface region (32), which projects beyond the inner planar end surface region radially outwardly and increasingly towards the geometric central longitudinal axis (L) of the anchor rod (3), and **in that** the radially outer end surface region (32) of the anchor rod (3) and the radially outer annular surface region (27) of the clamping ring (11) have a matched shape that is conical and/or arched in profile cross section for achieving support across the surface at least in a limited radius interval.

15. Coupling arrangement (2) according to claim 14 and according to at least claim 12, **characterised in that** the outer diameter (d₁) of the plane-parallel inner annular surface regions (28) of the clamping ring (11) corresponds, at least approximately, to the outer diameter (d₂) of the planar, radially inner end surface regions (31) of the anchor rods (3) and/or **in that** the inner diameter (d₃) of the plane-parallel inner annular surface regions (28) of the clamping ring (11) is, at least approximately, equal to or smaller than the inner diameter (d₄) of the radially inner end surface regions (31) of the anchor rods (3).

16. Coupling arrangement (2) according to claim 14 and in particular according to claim 15, **characterised in that** the outer diameter (d₅) of the radially outer end surface region (32) of the anchor rods (3) is within the radius interval (15) in which the contact surface (14) of the sealing ring (12) extends when said sealing ring is undeformed.

17. injection drill anchor, in particular for rotary-percussive drilling, comprising at least one drill bit screwed onto an anchor rod, **characterised in that** the injection drill anchor comprises at least one coupling arrangement according to one or more of the preceding claims.

18. Method for connecting two support members, in particular two anchor rods (3) of an injection drill anchor for rotary-percussive drilling, comprising the method steps of:
providing a coupling (1), the coupling (1) comprising a sleeve-like coupling box (4) that has screw-in openings (6), issuing from two opposing sides and each provided with internal threads (5), for screwing in support members,
a mounting projection (7), which faces radially inwards and extends in particular annularly along the entire periphery, being formed between the two internal threads (5) of the screw-in openings (6) on the inside of the coupling box (4),
a radial recess (8), which is rotationally symmetrical in relation to the geometric central longitudinal axis (L) of the coupling box (4), being formed in each case between the mounting projection (7) and the internal threads (5), which recess adjoins an in particular conical runout (10) of the adjacent internal thread (5) or cuts the internal thread (5),
an elastically deformable sealing ring (12), in particular made of plastics material, being insertable into the two recesses (10) in each case, and,
when the sealing ring (12) is unstressed, the outer diameter (D₁) thereof being larger than the inner diameter (D) of the mounting projection (7) and/or larger than the core diameter (D₂) of the internal thread (5),
**characterised by** the method steps of:
providing a clamping ring (11), in particular made of metal, the outer diameter (d) of which is smaller than or equal to the inner diameter (D) of the mounting projection (7),
using sealing rings (12), which each comprise a rotationally symmetrical contact surface (14) that extends in a radius interval (15) for abutment against one of the two side surfaces (16) of the clamping ring (11), which radius interval, when the sealing rings (12) are oriented concentrically to the clamping ring (11), geometrically overlaps, in part, a radius interval (17) of the side surfaces (16) of the clamping ring (11),
inserting a first sealing ring (12) into a first recess (8) such that the contact surface (14) thereof points towards the cross section enclosed by the mounting projection (7),
inserting the clamping ring (11) into the cross section enclosed by the mounting projection (7), and
inserting the second sealing ring (12) into the second recess (8) such that the contact surface thereof (14) points towards the cross section enclosed by the mounting projection (7).

19. Method according to the preceding method claim, **characterised in that** the sealing rings (12) are deformed elliptically before being inserted into the recess (8).

## Revendications

1. Accouplement (1) pour relier des éléments de support avec filetages externes, en particulier pour la connexion de tiges d'ancrage (3) de chevilles à injection pour forage à percussion rotatif, dans lequel l'accouplement (1) comprend un manchon d'accouplement (4) en forme de douille avec deux ouvertures de vissage (6) s'étendant de deux côtés opposés, chacune avec filetage interne (5), pour le vissage d'éléments de support avec filetage externe (9),
dans lequel entre les deux filetages internes (5) des ouvertures de vissage (6) à l'intérieur du manchon d'accouplement (4) une projection de montage (7) est formée, s'étendant radialement vers l'intérieur, en particulier s'étendant de façon annulaire sur toute la périphérie,
dans lequel entre la projection de montage (7) et les filetages internes (5) un évidement (8) radial respectif est formé, à symétrie de révolution par rapport à l'axe longitudinal central géométrique du manchon d'accouplement, l'évidement jouxtant une sortie (10), en particulier conique, du filetage interne (5) voisin ou coupant le filetage interne (5), dans lequel une bague d'étanchéité (12), élastiquement déformable, en particulier en matière plastique, est insérée ou peut être insérée respectivement dans les deux évidements (8), et
dans lequel, dans un état non contraint des bagues d'étanchéité, leur diamètre externe (D1) est supérieur au diamètre interne (D) de la projection de montage (7) et / ou supérieur au diamètre de coeur (D2) du filetage interne (5),
**caractérisé en ce que** l'accouplement (1) comprend une bague de serrage (11), en particulier en métal, dont le diamètre externe (d) est inférieur ou égal au diamètre interne (D) de la projection de montage (7), et **en ce que** les bagues d'étanchéité (12) ont chacune une surface de contact (14) à symétrie de révolution qui s'étend pour buter contre une des deux surfaces latérales (16) de la bague de serrage (11) dans un intervalle de rayon (15), recoupant géométriquement en partie un intervalle de rayon (17) des surfaces latérales (16) de la bague de serrage (11) dans une orientation de la bague d'étanchéité (12) concentrique à la bague de serrage.

2. Accouplement (1) selon la revendication 1,
caractérisé en ce la bague de serrage (11) est formée en tant que composant séparé du manchon d'accouplement (4).

3. Accouplement (1) selon l'une quelconque des revendications précédentes, **caractérisé en ce que** la bague de serrage (11) est insérée de manière lâche dans la section transversale creuse de la projection de montage (7) ou est solidarisé fixement à la projection de montage (7), en particulier emmanchée ou soudée.

4. Accouplement (1) selon l'une quelconque des revendications précédentes, **caractérisé en ce que**, dans l'état non contraint, les bagues d'étanchéité (12) insérées dans les évidements respectifs (8) sont maintenues en correspondance de forme, soit sur toute leur périphérie soit sur au moins une section périphérique, dans l'évidement (8) dans une direction parallèle à l'axe longitudinal central géométrique (L), et ce sans jeu ou avec seulement un léger jeu pour le mouvement.

5. Accouplement (1) selon l'une quelconque des revendications précédentes, **caractérisé en ce que** les bagues d'étanchéité (12) présentent chacune une portion annulaire (18) radialement interne, qui est délimitée sur un côté par la surface de contact (14) pour la bague de serrage (11), et **en ce que** les bagues d'étanchéité (12) présentent chacune une portion annulaire (20) radialement externe, se raccordant à la portion annulaire (18), qui est délimitée par une surface interne (21) cylindrique ou sensiblement cylindrique, qui rejoint la surface de contact (14) en étant manière inclinée ou arrondie.

6. Accouplement (1) selon l'une quelconque des revendications précédentes, **caractérisé en ce qu'**au moins dans l'intervalle de chevauchement radial (19), la surface de butée (14) de la bague d'étanchéité (12) et la surface latérale (16) de la bague de serrage (11) présentent un agencement mutuel adapté pour obtenir un support plat, en particulier au moins l'agencement étant partiellement conique et / ou ayant une section transverse profilée arrondie.

7. Accouplement (1) selon la revendication 5 et en particulier selon la revendication 6, **caractérisé en ce que** sur la portion annulaire externe (20), la surface interne (21) est adjacente à une surface latérale frontale (22) pour venir en butée contre une face latérale frontale (23) de la projection de montage (7), les surfaces latérales (22, 23) de la partie annulaire externe (20) et de la projection de montage (7) présentent un agencement mutuel adapté pour obtenir un support plat, et s'étendant en particulier dans la direction radiale transversale à l'axe longitudinal central géométrique (L).

8. Accouplement (1) selon la revendication 7,
**caractérisé en ce que** sur la portion annulaire extérieure (20), la surface latérale frontale, en particulier avec une forme arrondie, rejoint une surface externe (25), dans lequel la surface externe (25) de portion annulaire externe (20), et en particulier l'arrondi (24) qui y est adjacent, ainsi que la surface d'enveloppe de l'évidement (8) adjacente à la surface latérale (23) de la projection de montage (7) présentent un agencement mutuel adapté pour obtenir un support plat continu.

9. Accouplement (1) selon la revendication 8,
**caractérisé en ce que** sur la portion annulaire externe (20), la surface externe (25) rejoint une surface arrière (26) inclinée par rapport à celle-ci, dans lequel, dans une section orientée transversale à la direction circonférentielle, la surface arrière (26) est plus inclinée par rapport à l'axe longitudinal central géométrique (L) que la sortie conique (10) du filetage interne (5).

10. Accouplement (1) selon l'une quelconque des revendications précédentes, **caractérisé en ce que** dans un état préassemblé de l'accouplement (1), dans lequel les deux bagues d'étanchéité (12) sont insérées dans les évidements (8) et la bague de serrage (11) se trouve entre les deux bagues d'étanchéité (12), la bague de serrage (11) est maintenue par rapport au manchon d'accouplement (4) dans la direction parallèle à l'axe longitudinal central géométrique (L), avec seulement un léger jeu de mouvement ou sans jeu de mouvement.

11. Accouplement (1) selon l'une quelconque des revendications précédentes, **caractérisé en ce que** le diamètre interne (D) de la projection de montage (7) est inférieur ou approximativement égal au diamètre de coeur (D2) du filetage interne.

12. Accouplement (1) selon l'une quelconque des revendications précédentes, **caractérisé en ce que** les surfaces latérales frontales (16) mutuellement opposées de la bague de serrage (11) s'étendent de manière arrondie conique et / ou convexe dans une partie de surface annulaire radialement externe (27) et s'étendent dans une partie de surface annulaire radialement interne (28)perpendiculaire à l'axe longitudinal central géométrique (L) et dans des plans parallèles entre eux, dans lequel la partie de surface annulaire (27) radialement externe rejoint en arrondi la partie de surface annulaire radialement interne (28).

13. Ensemble d'accouplement (2) comprenant au moins un accouplement (1) selon l'une quelconque des revendications précédentes, **caractérisé en ce qu'**une tige d'ancrage (3), pour cheville d'injection de forage, est vissée respectivement des deux côtés dans le manchon d'accouplement (4), la tige étant pourvue d'un canal central continu (29) et avec un filetage externe (9), en particulier continu dans la direction longitudinale (L), jusqu'à la butée et en particulier le stress de la face frontale (30) de la tige d'ancrage contre chaque surface latérale opposée respective de la bague de serrage.

14. Ensemble d'accouplement (2) selon la revendication précédente, **caractérisé en ce que** la face frontale (30) de la tige d'ancrage (3) comprend une partie de surface frontale plate radialement interne (31) et une partie de surface frontale externe (32) radialement externe par rapport à celle-ci, qui dépasse dans la direction de l'axe longitudinal central géométrique (L) de la tige d'ancrage (3), de plus en plus radialement vers l'extérieur sur la partie de la surface frontale plane interne, et **en ce que** la partie de surface frontale radialement externe (32) de la tige d'ancrage (3) et la partie de surface annulaire radialement externe (27) de la bague de serrage (11) comprennent un agencement mutuel adapté pour obtenir un support plat, l'agencement mutuel étant en correspondance conique au moins dans un intervalle radial limité et / ou courbe dans la section transverse de profil.

15. Ensemble d'accouplement (2) selon la revendication 14 et au moins selon la revendication 12,
**caractérisé en ce que** le diamètre externe (d1) des parties de surface annulaire interne (28) coplanaires de la bague de serrage (11) correspond au moins approximativement au diamètre externe (d2) des parties de surface frontale internes (31) planes des tiges d'ancrage (3) et / ou **en ce que** le diamètre interne (d3) des parties de surfaces annulaires internes (28) coplanaires de la bague de serrage (11) est, au moins approximativement, égal ou inférieur au diamètre interne (d4) des parties de surface frontale radialement internes (31) des tiges d'ancrage (3).

16. Ensemble d'embrayage (2) selon la revendication 14 et en particulier la revendication 15, **caractérisé en ce que** le diamètre externe (d5) de la partie de surface frontale (32) radialement externe des tiges d'ancrage (3) se trouve à l'intérieur de l'intervalle de rayon (15), dans lequel la surface de butée (14) des bagues d'étanchéité (12) s'étend dans son état non déformé.

17. Cheville de forage à injection, en particulier pour le forage à percussion rotatif, comprenant au moins une couronne de forage vissé sur une tige d'ancrage, **caractérisée en ce que** la cheville de forage à injection comprend au moins un dispositif d'accouplement selon l'une quelconque des revendications précédentes.

18. Procédé de raccordement de deux éléments de support, en particulier de deux tiges d'ancrage (3) d'une cheville de forage à injection pour le forage à percussion rotatif, comprenant les étapes suivantes :
fournir un accouplement (1), dans lequel l'accouplement (1) comprend un manchon d'accouplement (4) en forme de douille avec deux ouvertures de vissage (6) s'étendant de deux côtés opposés, chacune avec filetage interne (5), pour le vissage d'éléments de support avec filetage externe (9),
dans lequel entre les deux filetages internes (5) des ouvertures de vissage (6) à l'intérieur du manchon d'accouplement (4) une projection de montage (7) est formée, s'étendant radialement vers l'intérieur, en particulier s'étendant de façon annulaire sur toute la périphérie,
dans lequel entre la projection de montage (7) et les filetages internes (5) un évidement (8) radial respectif est formé, à symétrie de révolution par rapport à l'axe longitudinal central géométrique du manchon d'accouplement, l'évidement jouxtant une sortie (10), en particulier conique, du filetage interne (5) voisin ou coupant le filetage interne (5), dans lequel une bague d'étanchéité (12), élastiquement déformable, en particulier en matière plastique, peut être insérée respectivement dans les deux évidements (8), et
dans lequel, dans un état non contraint des bagues d'étanchéité, leur diamètre externe (D1) est supérieur au diamètre interne (d) de la projection de montage (7) et / ou supérieur au diamètre de coeur (D2) du filetage interne (5),
**caractérisé par** les étapes de procédé suivantes :
fourniture d'une bague de serrage (11), en particulier en métal, dont le diamètre externe (d) est inférieur ou égal au diamètre interne (D) de la projection de montage (7),
utilisation de bagues d'étanchéité (12) ayant chacune une surface de contact (14) à symétrie de révolution qui s'étend pour buter contre une des deux surfaces latérales (16) de la bague de serrage (11) dans un intervalle de rayon (15), recoupant géométriquement en partie un intervalle de rayon (17) des surfaces latérales (16) de la bague de serrage (11), dans une orientation de la bague d'étanchéité (12) concentrique à la bague de serrage,
insertion d'une première bague d'étanchéité (12) dans un premier évidement (8) de sorte que sa surface de butée (14) fait face dans la direction de la section transverse entourée par la projection de montage (7),
insertion de la bague de serrage (11 dans la section transverse entourée par la projection de montage (7), et
insertion de la deuxième bague d'étanchéité (12) dans le deuxième évidement (8) de sorte que sa surface de butée (14) fait face dans la direction de la section transverse entourée par la projection de montage (7).

19. Procédé selon la revendication de procédé précédente, **caractérisé en ce que** les bagues d'étanchéité (12) sont déformées en forme ovale avant l'insertion dans les évidements (8).
